# EUROPEAN PATENT SPECIFICATION

(11) **EP 0 669 432 B1**
(45) Date of publication and mention of the grant of the patent: **14.10.1998**
(21) Application number: 95300930.5
(22) Date of filing: 10.02.1995
(51) Int. Cl.: E04C 2/296, B31B 23/00, B29C 65/00

(54) **Method for the manufacture of a thermal insulating panel**
Verfahren zur Herstellung einer Wärmeisolierungstafel
Procédé pour la fabrication d'un panneau pour l'isolation thermique

(30) Priority: 24.02.1994 GB 9403564
(43) Date of publication of application: 30.08.1995
(73) Proprietor: MICROPORE INTERNATIONAL LIMITED, Droitwich Worcestershire WR9 7DJ (GB)
(72) Inventor: McLoughlin, James Anthony, Greasby, Merseyside L49 1SS (GB)
(74) Representative: Jackson, Derek Charles

(56) References cited:
- EP-A- 0 184 926
- AU-B- 448 280
- DE-A- 1 729 018
- FR-A- 1 043 457
- US-A- 2 428 837
- US-A- 3 015 996

## Description

This invention relates to a method for the manufacture of a thermal insulating panel comprising an outer porous envelope containing consolidated particulate thermal insulating material, particularly, but not exclusively, microporous thermal insulating material (cf. EP-A-0 184 926).

The term 'microporous' is used herein to identify porous or cellular materials in which the ultimate size of the cells or voids is less than the mean free path of an air molecule at NTP, i.e. of the order of 100 nm or smaller. A material which is microporous in this sense will exhibit very low transfer of heat by air conduction (that is collisions between air molecules). Such microporous materials include aerogel, which is a gel in which the liquid phase has been replaced by a gaseous phase in such a way as to avoid the shrinkage which would occur if the gel were dried directly from a liquid. A substantially identical structure can be obtained by controlled precipitation from solution, the temperature and pH being controlled during precipitation to obtain an open lattice precipitate. Other equivalent open lattice structures include pyrogenic (fumed) and electro-thermal types in which a substantial proportion of the particles have an ultimate particle size less than 100 nm. Any of these particulate materials, based for example on silica, alumina or other metal oxides, may be used to prepare a composition which is microporous as defined above.

The microporous insulating material typically comprises a dry particulate microporous material as defined hereinabove mixed with fibre or filament reinforcement, an opacifier such as titanium dioxide and, for high-temperature use, a small quantity of alumina powder to resist shrinkage.

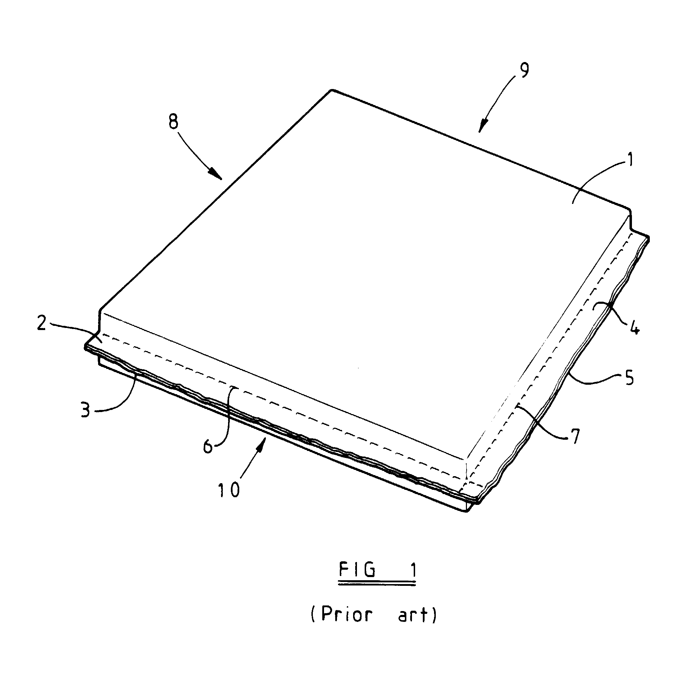

It is known to manufacture such a panel as shown in Figure 1 by taking a substantially rectangular sheet of porous material 1, particularly glass cloth material, and folding it over on itself to bring a pair of opposite edges 2, 3 into overlying aligned interfacial engagement with one another. These overlying edges, and subsequently a further pair of overlying edges 4, 5 adjacent thereto, are secured together by lines of stitching 6, 7 using a suitable sewing machine and appropriate thread or yarn. An envelope is thereby formed having an open end 8 through which dry microporous insulating material is introduced into the envelope. After sealing the open end 8, again by stitching, the filled envelope is then placed between opposing plates of a press and pressure is applied to consolidate the insulating material within the envelope, with the accompaniment of displacement of air through the porous sheet material 1 of the envelope. A substantially rectangular rigid thermal insulating panel results.

There can be a disadvantage in a panel produced in this way in that, although one side edge 9 of the panel has a smooth contour as a result of the material of the sheet 1 wrapping around it without any join therein, nevertheless the opposite side edge 10 is somewhat irregular on account of what is effectively a flange of envelope material which protrudes beyond the line of stitches 6. In application of panels as thermal insulation it is often required to provide a row of panels side by side with the opposite side edges 9 and 10 of one panel tightly abutting corresponding side edges of adjacent panels. Although side edge 9 of one panel can abut a corresponding side edge of another panel with good thermal efficiency, the side edge 10 of the panel may be less efficient in abutting the edge of another panel. Furthermore, the side edge 10 may be aesthetically less satisfactory than the side edge 9.

It is an object of the present invention to overcome or minimise this disadvantage of the prior art.

The present invention provides a method for the manufacture of a thermal insulating panel comprising the steps of:
providing a substantially rectangular sheet of porous material;
folding the sheet over on itself to bring a pair of opposite edges thereof into overlying aligned interfacial engagement with one another and securing the overlying edges together along the interface therebetween to form a tubular member having a seam extending in an axial direction thereof;
flattening the tubular member to form two opposed closed side edges extending in the axial direction of the tubular member and two opposed open side edges extending laterally of the axial direction of the tubular member, the seam being positioned intermediate the two opposed closed side edges;
closing one of the two open side edges of the tubular member to form an envelope open along one side edge thereof; and
introducing particulate thermal insulating material into the envelope through the open side edge thereof, closing the open side edge and applying pressure to the exterior of the envelope to consolidate the insulating material, with displacement of air through the porous sheet material, whereby a substantially rectangular panel is formed having two opposed side edges neither of which contains the said seam.

The particulate thermal insulating material may comprise microporous thermal insulating material.

The sheet of porous material preferably comprises glass cloth material. However, it may alternatively comprise other materials such as: paper; cotton; a fibrous synthetic plastics material; a perforated or porous metal foil; a perforated sheet such as polyethylene, or other plastics material, sheet.

The securing of the overlying edges of the sheet together to form the tubular member may be effected by means of a suitable adhesive, or by clip means such as staples, or, where the material of the sheet permits (for example, glass cloth), by means of stitching, using an appropriate sewing machine and thread or yarn.

The closing of the two opposed open side edges of the tubular member to form the envelope and to close the envelope may be effected by means of a suitable adhesive, or by clip means such as staples, or, where the material of the sheet permits (for example, glass cloth), by means of stitching, using an appropriate sewing machine and thread or yarn.

A stack of panels may be produced, secured together, for example by an adhesive, at their major faces.

By means of the method of the present invention, a substantially rectangular thermal insulating panel is provided having two opposed closed side edges around which the sheet material extends smoothly without any seams or flanges of the sheet material. A row of such panels is thereby able to be provided for a particular application such that edges of adjacent panels smoothly and efficiently abut one another, and also with improved aesthetic appearance compared with panels prepared by the method of the prior art.

The invention is now described by way of example with reference to the accompanying drawings in which:
Figure 1 shows a thermal insulating panel made by a known method;
Figures 2 to 7 represent perspective views of a thermal insulating panel in consecutive steps of its manufacture according to the method of the invention; and
Figures 8 and 9 illustrate alternative methods for closing the edges of the panel.

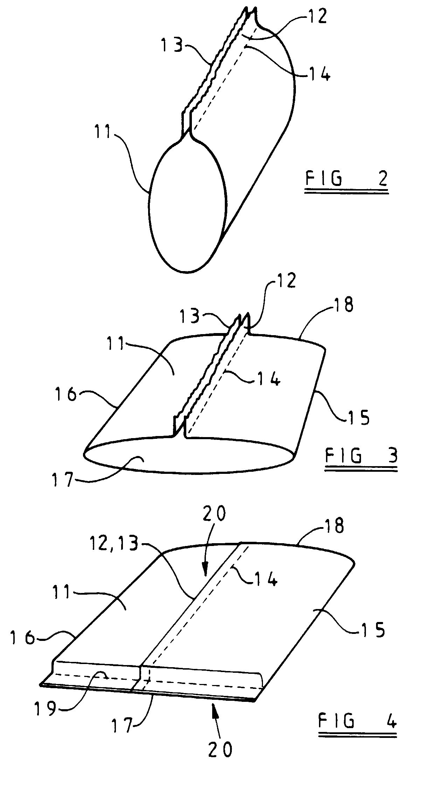

Referring to Figure 2, a substantially rectangular sheet 11 of porous material, in particular of glass cloth material, is folded over on itself to bring a pair of opposite edges 12, 13 thereof into overlying aligned interfacial engagement with one another and these overlying edges 12, 13 are secured together by means of stitching 14, using a suitable sewing machine and appropriate thread or yarn, to form a seam. Instead of stitching, the edges 12 and 13 could be secured together by means of an adhesive, or by means of clips such as staples in a stapling operation.

The resulting tubular member, or loop of material, is then subjected to a degree of rolling motion on itself to move the secured edges 12, 13 of the sheet into the position shown in Figure 3 and the tubular member is then flattened somewhat. In this way, two opposed closed side edges 15, 16 of the flattened tubular member are formed, neither of which side edges contains the pair of secured overlying edges 12, 13 of the sheet 11 which form the seam, the seam being positioned intermediate the two closed side edges 15, 16. Two opposed side edges 17, 18 of the tubular member remain open.

In the next stage of the manufacturing process, as shown in Figure 4, one open edge 17 of the two opposed open side edges 17, 18 is closed by means of a line of stitching 19 (although other means such as an adhesive or clips, such as staples, could be used), the secured overlying edges 12, 13 being flattened from their hitherto upstanding position and retained in the flattened position by means of the line of stitching 19. The result is a glass cloth envelope open on one remaining side edge 18.

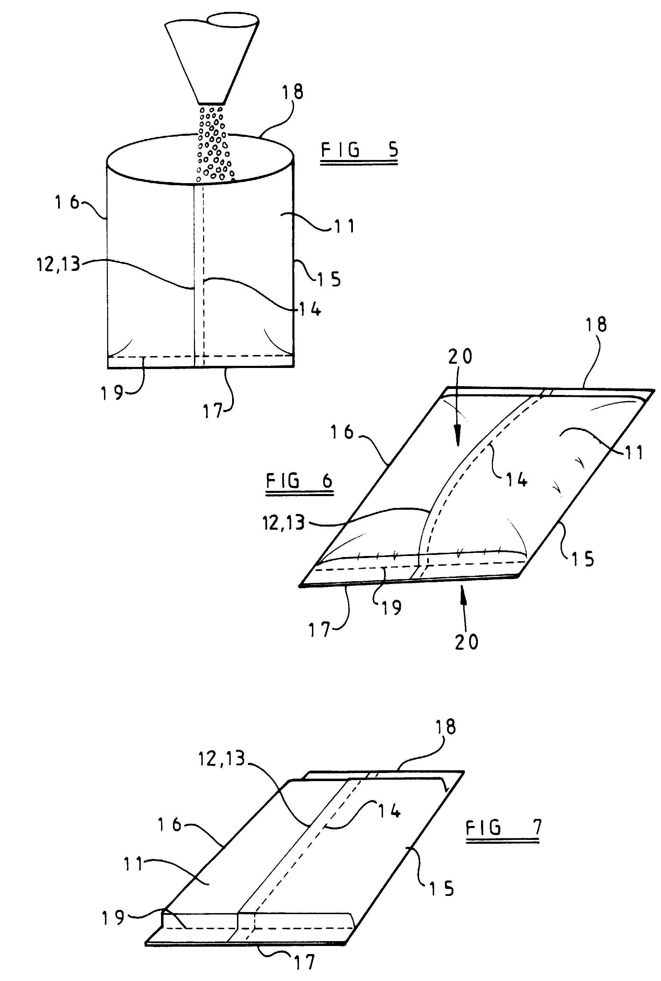

Dry particulate microporous thermal insulation material of well known form is then poured into the resulting envelope through the remaining open side edge 18 as illustrated in Figure 5 and this remaining open side edge is closed by stitching, or other means, as for the side edge 17 as illustrated in Figure 6. The envelope containing the insulating material is then located between opposing plates of a press (not shown) and pressure is applied in the direction of arrows 20 to consolidate the insulating material within the envelope into a substantially rigid block. During consolidation, air from the microporous insulating material is displaced through the porous glass cloth material 11 from which the envelope is formed.

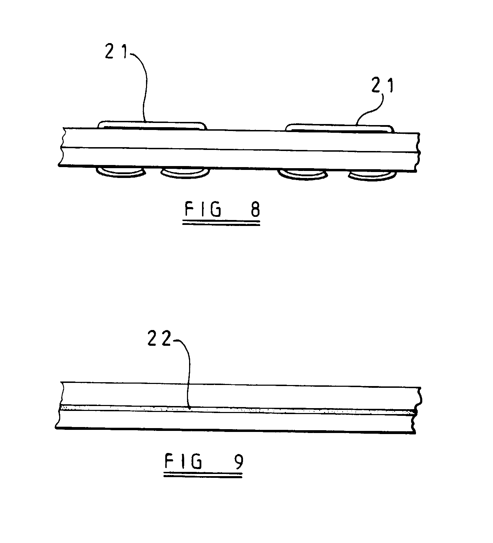

The resulting panel of thermal insulating material is rigid and is shown in Figure 7. It is substantially rectangular and is advantageous in that the two opposed side edges 15, 16 are uniformly smooth and neither of them contains any joined edges of the glass cloth material forming the seam, such joined edges 12, 13 being on a major face of the panel and neatly flattened. This is advantageous, aesthetically and also from the aspect of thermal insulation efficiency. If it is required to provide a row of such panels in abutting side by side relationship, then since the uniform, smooth side edges 15, 16 of one panel abut similar side edges on an adjacent panel this results in maintenance of good thermal insulation at the interfaces.

If desired, the flanges of glass cloth material protruding beyond the stitching at the edges 17 and 18 of the panel may be finally removed by trimming the panel and the exposed edges of insulation material may be coated or treated with a suitable material. For example, a strip of glass cloth material may be secured around these edges by means of an adhesive such as a sodium silicate adhesive.

It is to be understood that although the joined edges 12, 13 of the sheet 11 of glass cloth material are shown extending substantially midway across a major face of the panel, this midway position is not essential and any desired position on the major face intermediate the side edges 15, 16 may be considered.

Figure 8 illustrates an alternative method for closing the edges of the panel, whether they be the edges 12, 13, edge 17 or edge 18. The method involves the use of clips in the form of staples 21. Figure 9 illustrates a further alternative method for closing the edges of the panel, whether they be the edges 12, 13, edge 17 or edge 18, which method involves the use of an adhesive 22 between the edges.

## Claims

1. A method for the manufacture of a thermal insulating panel comprising the steps of:
providing a substantially rectangular sheet (11) of porous material;
folding the sheet over on itself to bring a pair of opposite edges (12, 13) thereof into overlying aligned interfacial engagement with one another and securing the overlying edges together along the interface therebetween to form a tubular member having a seam extending in an axial direction thereof;
flattening the tubular member to form two opposed closed side edges (15, 16) extending in the axial direction of the tubular member and two opposed open side edges (17, 18) extending laterally of the axial direction of the tubular member, the seam being positioned intermediate the two opposed closed side edges;
closing one of the two open side edges (17) of the tubular member to form an envelope open along one side edge thereof; and
introducing particulate thermal insulating material into the envelope through the open side edge thereof, closing the open side edge (18) and applying pressure to the exterior of the envelope to consolidate the insulating material, with displacement of air through the porous sheet material, whereby a substantially rectangular panel is formed having two opposed side edges (15, 16) neither of which contains the said seam.

2. A method according to claim 1, wherein the particulate thermal insulating material comprises microporous thermal insulating material.

3. A method according to claim 1 or 2, wherein the sheet (11) of porous material comprises glass cloth material.

4. A method according to claim 1 or 2, wherein the sheet (11) of porous material comprises: paper; cotton; a fibrous synthetic plastics material; a perforated or porous metal foil; a perforated sheet such as polyethylene, or other plastics material, sheet.

5. A method according to any one of the preceding claims, wherein securing of the overlying edges (12, 13) of the sheet together to form the tubular member is effected by means of a suitable adhesive (22), or by clip means such as staples (21).

6. A method according to any one of claims 1 to 4, wherein securing of the overlying edges (12, 13) of the sheet together to form the tubular member is effected by means of stitching (14), the sheet material being selected to be capable of such stitching.

7. A method according to any one of the preceding claims, wherein the closing of the two opposed open side edges (17, 18) of the tubular member to form and subsequently close the envelope is effected by means of a suitable adhesive (22), or by clip means such as staples (21).

8. A method according to any one of claims 1 to 6, wherein the closing of the two opposed open side edges (17, 18) of the tubular member to form and subsequently close the envelope is effected by means of stitching (19), the sheet material being selected to be capable of such stitching.

## Patentansprüche

1. Verfahren zur Herstellung einer Wärmeisolierungstafel, umfassend die folgenden Schritte:
Bereitstellen eines im wesentlichen rechteckigen Bogens (11) aus porösem Material;
Umschlagen des Bogens über sich selbst, um ein Paar seiner gegenüberliegenden Kanten (12, 13) miteinander in einen übereinanderliegend ausgerichteten Grenzflächeneingriff zu bringen und Befestigen der übereinanderliegenden Kanten aneinander über die dazwischenliegende Grenzfläche, um ein röhrenförmiges Element zu bilden, das eine in axialer Richtung davon verlaufende Naht aufweist;
Abflachen des röhrenförmigen Elementes, um zwei gegenüberliegende geschlossene Seitenkanten (15, 16), die in axialer Richtung des röhrenförmigen Elementes verlaufen, und zwei gegenüberliegende offene Seitenkanten (17, 18) zu bilden, die seitlich zur axialen Richtung des röhrenförmigen Elementes verlaufen, wobei die Naht zwischen den zwei gegenüberliegenden geschlossenen Seitenkanten positioniert ist;
Schließen von einer der zwei offenen Seitenkanten (17) des röhrenförmigen Elementes, um einen Umschlag zu bilden, der über seine eine Seitenkante offen ist; und
Einführen von partikulärem Wärmeisoliermaterial in den Umschlag über seine offene Seitenkante, Schließen der offenen Seitenkante (18) und Aufbringen von Druck auf die Außenseite des Umschlags, um das Isoliermaterial zu verdichten, wobei Luft durch das poröse Bogenmaterial verdrängt wird, wodurch eine im wesentlichen rechteckige Tafel mit zwei gegenüberliegenden Seitenkanten (15, 16) gebildet wird, von denen keine die genannte Naht aufweist.

2. Verfahren nach Anspruch 1, wobei das partikuläre Wärmeisoliermaterial mikroporöses Wärmeisoliermaterial umfaßt.

3. Verfahren nach Anspruch 1 oder 2, wobei der Bogen (11) aus porösem Material Glasgewebematerial umfaßt.

4. Verfahren nach Anspruch 1 oder 2, wobei der Bogen (11) aus porösem Material folgendes umfaßt: Papier, Baumwolle, eine faserige Plastmasse, eine perforierte oder poröse Metallfolie, einen perforierten Bogen wie Polyethylen oder einen anderen Kunststoffbogen.

5. Verfahren nach einem der vorherigen Ansprüche, wobei zum Formen des röhrenförmigen Elementes die übereinanderliegenden Kanten (12, 13) des Bogens mit einem geeigneten Klebstoff (22) oder mit Klammern, wie zum Beispiel Heftklammern (21), aneinander befestigt werden.

6. Verfahren nach einem der Ansprüche 1 bis 4, wobei zum Formen des röhrenförmigen Elementes die übereinanderliegenden Kanten (12, 13) des Bogens durch Steppen (14) aneinander befestigt werden, wobei ein zum Steppen geeignetes Bogenmaterial ausgewählt wird.

7. Verfahren nach einem der vorherigen Ansprüche, wobei zum Formen und anschließenden Schließen des Umschlags die zwei gegenüberliegenden offenen Seitenkanten (17, 18) des röhrenförmigen Elementes mit einem geeigneten Klebstoff (22) oder mit Klammern, wie zum Beispiel Heftklammern (21), geschlossen werden.

8. Verfahren nach einem der Ansprüche 1 bis 6, wobei zum Formen und anschließenden Schließen des Umschlags die zwei gegenüberliegenden offenen Seitenkanten (17, 18) des röhrenförmigen Elementes durch Steppen (19) geschlossen werden, wobei ein zum Steppen geeignetes Bogenmaterial ausgewählt wird.

## Revendications

1. Méthode de fabrication d'un panneau d'isolation thermique comprenant les étapes de :
mise en oeuvre d'une feuille substantiellement rectangulaire (11) de matériau poreux;
pliage de la feuille sur elle-même pour amener une paire de ses bords opposés (12, 13) en engagement aligné interfacial superposé l'un avec l'autre et fixation l'un à l'autre des bords superposés le long de leur interface pour former un élément tubulaire ayant une couture disposée dans sa direction axiale;
aplatissement de l'élément tubulaire pour former deux bords latéraux opposés fermés (15, 16) dans la direction axiale de l'élément tubulaire et deux bords latéraux opposés ouverts (17, 18) transversalement à la direction axiale de l'élément tubulaire, le joint étant positionné entre les deux bords latéraux opposés fermés;
fermeture de l'un des deux bords latéraux ouverts (17) de l'élément tubulaire pour former une enveloppe ouverte sur un de ses bords latéraux; et
introduction de matériau particulaire d'isolation thermique dans l'enveloppe par son bord latéral ouvert, fermeture du bord latéral ouvert (18) et application de pression à l'extérieur de l'enveloppe pour consolider le matériau isolant, avec déplacement de l'air à travers le matériau en feuille poreux, si bien qu'un panneau substantiellement rectangulaire est formé, qui a deux bords latéraux opposés (15, 16) dont aucun ne comporte ledit joint.

2. Méthode selon la revendication 1, dans laquelle le matériau d'isolation thermique particulaire est constitué de matériau d'isolation thermique microporeux.

3. Méthode selon la revendication 1 ou 2, dans laquelle la feuille (11) de matériau poreux est constituée de tissu de fibre de verre.

4. Méthode selon la revendication 1 ou 2, dans laquelle la feuille (11) de matériau poreux est constituée de : papier, coton, matière plastique synthétique fibreuse, feuille métallique perforée ou poreuse, feuille perforée telle qu'une feuille de polyéthylène ou d'autre matière plastique.

5. Méthode selon l'une quelconque des revendications précédentes, dans laquelle la fixation l'un à l'autre des bords superposés (12, 13) de la feuille pour former l'élément tubulaire est assurée au moyen d'un adhésif approprié (22) ou par un moyen d'accrochage tel que des agrafes (21).

6. Méthode selon l'une quelconque des revendications 1 à 4, dans laquelle la fixation l'un à l'autre des bords superposés (12, 13) de la feuille pour former l'élément tubulaire est assurée au moyen d'une couture (14), le matériau de la feuille étant choisi pour pouvoir être ainsi cousu.

7. Méthode selon l'une quelconque des revendications précédentes, dans laquelle la fermeture des deux bords latéraux ouverts opposés (17, 18) de l'élément tubulaire pour former et fermer ensuite l'enveloppe est réalisée au moyen d'un adhésif approprié (22), ou par un moyen d'accrochage tel que des agrafes (21).

8. Méthode selon l'une quelconque des revendications 1 à 6, dans laquelle la fermeture des deux bords latéraux ouverts opposés (17, 18) de l'élément tubulaire pour former et fermer ensuite l'enveloppe est réalisée au moyen d'une couture (19), le matériau de la feuille étant choisi pour pouvoir être ainsi cousu.
